# EUROPÄISCHE PATENTSCHRIFT

(11) **EP 1 952 951 B1**
(45) Veröffentlichungstag und Bekanntmachung des Hinweises auf die Patenterteilung: **21.11.2012**
(21) Anmeldenummer: 08100758.5
(22) Anmeldetag: 22.01.2008
(51) Int. Cl.: B25D 17/24, F16F 7/104, F16F 7/116, B25D 16/00

(54) **Drehende und schlagende Handwerkzeugmaschine mit einem Schwingungstilger**
Rotating and striking hand held power tool with a vibration damper
Machine-outil manuelle tournante et frappante avec un amortisseur de vibrations

(30) Priorität: 31.01.2007 DE 102007000056
(43) Veröffentlichungstag der Anmeldung: 06.08.2008
(73) Patentinhaber: HILTI Aktiengesellschaft, 9494 Schaan (LI)
(72) Erfinder: Mössnang, Franz, 86899 Landsberg (DE)
(74) Vertreter: Wildi, Roland

(56) Entgegenhaltungen:
- DE-A1-102006 029 150
- DE-B3-102005 033 528
- DE-C- 878 737
- JP-A- 61 146 610

## Beschreibung

Die Erfindung bezeichnet eine drehende und schlagende Handwerkzeugmaschine, insbesondere einen Bohrhammer, Kombihammer oder Meisselhammer, mit einem Schwingungstilger.

Ein Schwingungstilger ist ein schwingungsfähiges Teilsystem, welches aus einer abstrakten schwingbaren Masse, einer abstrakten Feder und einem abstrakten Dämpfer besteht, welche jeweils nicht explizit als konkretes Bauteil ausgeführt sein müssen. Insbesondere der abstrakte Dämpfer wird oft nicht als konkretes Bauteil realisiert und ist dennoch durch praktisch stets auftretende Reib- und Strömungsverluste wirksam. Man unterscheidet gewöhnliche passive Schwingungstilger, welche ausschliesslich selbst erregt sind, von aktiv gesteuerten Schwingungstilgern.

Durch eine geeignete Wahl der Federkonstanten und der Masse wird bei einem passiven Schwingungstilger dessen Eigenfrequenz nahe der zu dämpfenden Störfrequenz dimensioniert, in diesem Verwendungsfall der Vibration des Aussengehäuses der Handwerkzeugmaschine.

Nach der FR2237734 werden bei schlagenden Handwerkzeugmaschinen zur Verminderung der Gehäuseschwingungen derartige passive Schwingungstilger eingesetzt.

Nah der US4478293 sind zwei passive Schwingungstilger über Druckluftschwankungen miteinander synchronisiert.

Nach der EP1415768, die eine drehende und schlagende Handwerkzeugmaschine mit den Merkmalen des Oberbegriffs des Anspruchs 1 offenbart ist der Schwingungstilger innerhalb eines Tilgergehäuses angeordnet, welches ausserhalb am restlichen Aussengehäuse der Handwerkzeugmaschine auf der dem Handgriff gegenüberliegenden Gehäuseoberseite lösbar form- oder kraftschlüssig festgelegt ist.

Nach der W02006022345 ist der Schwingungstilger innerhalb des Aussengehäuses an der dem Handgriff gegenüberliegenden Gehäuseoberseite angeordnet. Die kompakte Tilgermasse ist axial beidseitig jeweils mit zwei seitlich gegenüberliegenden, zueinander parallel geschalteten Schraubendruckfedern druckvorgespannt, deren Federsteifigkeiten sich addieren und dadurch die Eigenresonanzfrequenz erhöhen.

DE 10 2005 033528 B3 offenbart einen Tilger für ein Cabriolet, das bei offenem und geschlossenen Verdeck eine unterschiedliche Abstimmung der Eigenfrequenz des Tilgers erfordert. Der Tilger hat eine Nabe zur Befestigung an der Karosserie. Konzentrisch zu der Nabe sind eine erste zylindrische Elastomerschubfeder, ein Auflager, eine zweite zylindrische Elastomerschubfeder und eine topfförmige Tilgermasse angeordnet. Eine Klaue kann die Nabe starr mit dem Auflager verbinden und die erste Elastomerschubfeder entkoppeln. Die Klaue ist über einen Seilzug mit der Karosserie verbunden.

JP 61 146610 A beschreibt einen Tilger für eine Achsenaufhängung eines Kraftfahrzeuges. Eine Tilgermasse ist über eine Feder dauerhaft an das Fahrzeug angebunden. Zusätzliche Federn können mittels eines Elektromagnets an die Tilgermasse angebunden werden. Die Ansteuerung der Elektromagnete erfolgt in Abhängigkeit der Geschwindigkeit des Fahrzeugs.

Da passive Schwingungstilger relativ schmalbandig sind, muss die Eigenfrequenz ziemlich genau der zu dämpfenden Störfrequenz entsprechen. Bei schlagenden Handwerkzeugmaschinen kann sich die Schlagfrequenz jedoch wesentlich ändern, insbesondere abhängig vom durch den Nutzer ausgewählten Betriebsmodus.

Die Aufgabe der Erfindung besteht in der Realisierung eines für eine Handwerkzeugmaschine mit schaltbar veränderlicher Schlagfrequenz geeigneten Schwingungstilgers.

Die Aufgabe wird im Wesentlichen durch die Merkmale des Anspruchs 1 gelöst. Vorteilhafte Weiterbildungen ergeben sich aus den Unteransprüchen.

So weist ein Schwingungstilger für eine Handwerkzeugmaschine eine schwingbare Tilgermasse auf, welche über zumindest eine Feder zu einem Gehäuse axial druckvorgespannt ist, wobei ein vom Nutzer versetzbares Schaltmittel vorhanden ist, durch welches die Tilgermasse schaltbar zumindest über eine Zusatzfeder mit dem Gehäuse axial druckvorgespannt verbindbar ist.

Durch die schaltbar axial druckvorgespannt mit dem Gehäuse verbindbare Zusatzfeder wird deren Federsteifigkeit zu jener der Feder hinzuaddiert, wodurch die Eigenresonanzfrequenz schaltbar verändert wird. Dabei ist die Zusatzfeder derart dimensioniert, dass die veränderte Eigenresonanzfrequenz der veränderten Schlagfrequenz entspricht.

Vorteilhaft ist die Zusatzfeder in der Spiegelebene eines spiegelsymmetrisch ausgebildeten Schwingungstilgers angeordnet, wodurch beim Schalten diese Symmetrie erhalten bleibt und es nicht zu Verbiegungen oder Querschwingungen kommt.

Vorteilhaft sind die nicht in der Spiegelebene eines spiegelsymmetrisch ausgebildeten Schwingungstilgers angeordneten Federn paarweise vorhanden und zueinander spiegelbildlich angeordnet, wodurch es nicht zu Verbiegungen oder Querschwingungen kommt.

Vorteilhaft sind die Feder(n) und die Zusatzfeder(n) bezüglich ihrer Federlänge vollständig innerhalb der Tilgermasse angeordnet, weiter vorteilhaft in einer passenden Aussparung, wodurch die axiale Baulänge des Schwingungstilgers im Wesentlichen durch die Tilgermassenlänge bestimmt wird, die somit grösstmöglich ist.

Vorteilhaft ist der Schwingungstilger axial fest zum Aussengehäuse der Handwerkzeugmaschine festgelegt, wodurch die Vibrationen des Aussengehäuses gedämpft werden.

Das Schaltmittel ist über ein versetzbares Schaltgestänge mit dem schaltbaren Modiwahlschalter der Handwerkzeugmaschine verbunden, wodurch abhängig von den vom Nutzer ausgewählten Betriebsmodi die Eigenfrequenz des Schwingungstilgers umgeschaltet wird.

Die Erfindung wird bezüglich eines vorteilhaften Ausführungsbeispiels näher erläutert mit einer Darstellung einer Handwerkzeugmaschine mit Schwingungstilger im Längsschnitt.

Nach der Darstellung weist eine drehende und schlagende Handwerkzeugmaschine 2 mit einem Aussengehäuse 5 einen dazu festgelegten Schwingungstilger 1 mit einer längs der Schlagachse A schwingbaren Tilgermasse 3 auf, welche über zwei parallele Federn 4 zu dem Aussengehäuse 5 der Handwerkzeugmaschine 2 axial druckvorgespannt sind. Ein vom Nutzer schaltbarer Modiwahlschalter 6 der Handwerkzeugmaschine 2 zum Umschalten von einem Normalbetriebsmodus I in einen Zusatzbetriebsmodus II mit einer höheren Schlagfrequenz ist über ein versetzbares Schaltgestänge 7 mit einem versetzbaren Schaltmittel 8 verbunden, durch welches die Tilgermasse 3 schaltbar über eine Zusatzfeder 9 zum Aussengehäuse 5 axial druckvorgespannt verbindbar ist. Die Zusatzfeder 9 ist in der Spiegelebene S des spiegelsymmetrisch ausgebildeten Schwingungstilgers 1 angeordnet und die beiden Federn 4 sind zueinander spiegelbildlich. Dabei sind die Federn 4 und die Zusatzfeder 9 bezüglich ihrer Federlänge vollständig innerhalb der Tilgermasse 3 jeweils in einer passenden Aussparung 10 angeordnet.

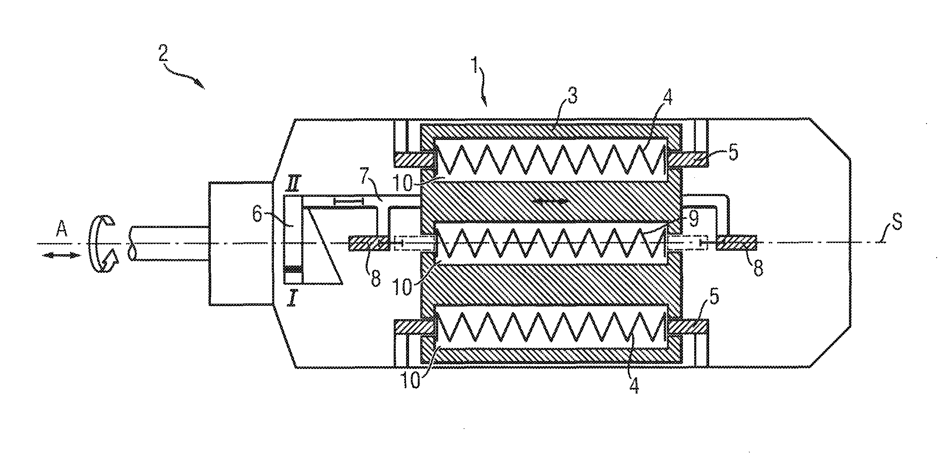

## Patentansprüche

1. Drehende und schlagende Handwerkzeugmaschine (2) mit
einem Aussengehäuse (5),
einem am Aussengehäuse (5) festgelegten Schwingungstilger (1), der eine längs der Schlagachse (A) schwingbaren Tilgermasse (3) aufweist, welche über zumindest eine Feder (4) zu dem Aussengehäuse (5) der Handwerkzeugmaschine (2) axial druckvorgespannt ist, **gekennzeichnet durch**
einen vom Nutzer schaltbaren Modiwahlschalter (6) der Handwerkzeugmaschine (2) zum Umschalten von einem Normalbetriebsmodus in einen Zusatzbetriebsmodus mit einer höheren Schlagfrequenz, wobei der schaltbare Modiwahlschalter (6) über ein versetzbares Schaltgestänge (7) mit einem versetzbaren Schaltmittel (8) verbunden ist, **durch** welches die Tilgermasse (3) schaltbar über eine Zusatzfeder (9) zu dem Aussengehäuse (5) axial druckvorgespannt verbindbar ist.

2. Handwerkzeugmaschine nach Anspruch 1, **dadurch gekennzeichnet, dass** die Zusatzfeder (9) in seiner Spiegelebene (S) angeordnet ist.

3. Handwerkzeugmaschine nach Anspruch 1 oder 2, **dadurch gekennzeichnet, dass** die nicht in einer Spiegelebene (S) angeordneten Federn (4) paarweise vorhanden und zueinander spiegelbildlich angeordnet sind.

4. Handwerkzeugmaschine nach einem der Ansprüche 1 bis 3, **dadurch gekennzeichnet, dass** die Feder(n) (4) und die Zusatzfeder(n) (9) bezüglich ihrer Federlänge vollständig innerhalb der Tilgermasse (3) angeordnet sind.

5. Handwerkzeugmaschine nach einem der vorherigen Ansprüche, **gekennzeichnet durch** eine Festlegung, die zum Aussengehäuse (5) der Handwerkzeugmaschine (2) axial fest ist.

## Claims

1. Hand-held rotating and percussive power tool (2) with
an external housing (5),
an oscillation damper (1) which is fixed to the external housing (5) and has a damping mass (3) oscillatable along the percussion axis (A) and axially biased in compression with respect to the external housing (5) of the power tool (2) by at least one spring (4), **characterized by**
a user-operated mode-selection switch (6) of the power tool (2) for switching from a normal operating mode to an additional operating mode with a higher percussion frequency, the switchable mode-selection switch (6) being connected by a shiftable linkage (7) to a shiftable switch means (8) by means of which the damping mass (3), biased in compression with respect to the external housing (5) by an additional spring (9), is switchably connectable.

2. Hand-held power tool according to Claim 1, **characterized in that** the additional spring (9) is arranged in the power tool's plane of symmetry (S).

3. Hand-held power tool according to Claim 1 or Claim 2, **characterized in that** the springs (4) which are not arranged in a plane of symmetry (S) are provided in pairs and are arranged symmetrically with respect to each other.

4. Hand-held power tool according to any one of Claims 1 to 3, **characterized in that** the spring(s) (4) and additional spring(s) (9) are arranged entirely within the damping mass (3) in respect of their length.

5. Hand-held power tool according to any one of the preceding claims, **characterized by** a fixing that is axially fixed with respect to the external housing (5) of the power tool (2).

## Revendications

1. Machine-outil manuelle rotative et à percussion (2) comportant :
un boîtier extérieur (5),
un amortisseur de vibrations (1) fixé sur le boîtier extérieur (5), lequel amortisseur de vibrations comporte une masse d'amortissement (3) pouvant vibrer le long de l'axe de percussion (A), laquelle masse d'amortissement est précontrainte axialement contre le boîtier extérieur (5) de la machine-outil manuelle (2) par l'intermédiaire d'au moins un ressort (4),
**caractérisée par**
un commutateur de sélection de mode (6) pouvant être commuté par l'utilisateur de la machine-outil manuelle (2) pour basculer d'un mode de fonctionnement normal à un mode de fonctionnement auxiliaire avec une fréquence de percussion plus élevée, dans lequel le commutateur de sélection de mode commutable (6) est relié à des moyens de commutation mobiles (8) par l'intermédiaire d'une tige de commutation mobile (7), moyens de commutation par l'intermédiaire desquels la masse d'amortissement (3) peut être reliée de manière axialement précontrainte contre le boîtier extérieur (5) et de manière commutable par l'intermédiaire d'un ressort supplémentaire (9).

2. Machine-outil manuelle selon la revendication 1, **caractérisée en ce que** le ressort supplémentaire (9) est agencé dans son plan de symétrie (S).

3. Machine-outil manuelle selon la revendication 1 ou 2, **caractérisée en ce que** les ressorts (4) non agencés dans un plan de symétrie (S) sont présents par paires et sont agencés de manière inversée l'un par rapport à l'autre.

4. Machine-outil manuelle selon l'une quelconque des revendications 1 à 3, **caractérisée en ce que** le(s) ressort(s) (4) et le(s) ressort(s) supplémentaire(s) (9) sont agencés entièrement à l'intérieur de la masse d'amortissement (3) par rapport à leur longueur de ressort.

5. Machine-outil manuelle selon l'une quelconque des revendications précédentes, **caractérisée par** une fixation qui est axialement fixe par rapport au boîtier extérieur (5) de la machine-outil manuelle (2).
